# EUROPÄISCHE PATENTSCHRIFT

(11) **EP 2 544 908 B1**
(45) Veröffentlichungstag und Bekanntmachung des Hinweises auf die Patenterteilung: **18.04.2018**
(21) Anmeldenummer: 11718081.0
(22) Anmeldetag: 05.05.2011
(51) Int. Cl.: B60K 6/48, B60K 6/547, F16H 3/00, B60K 6/387, F16H 61/688, B60W 10/10, B60W 30/18, B60K 6/405, F16D 21/06, F16H 3/097

(54) **HYBRIDANTRIEB EINES KRAFTFAHRZEUGS UND VERFAHREN ZU DESSEN STEUERUNG**
HYBRID DRIVE OF A MOTOR VEHICLE AND METHOD FOR CONTROLLING SAME
ENTRAÎNEMENT HYBRIDE DE VÉHICULE À MOTEUR ET SON PROCÉDÉ DE COMMANDE

(30) Priorität: 28.06.2010 DE 102010030569
(43) Veröffentlichungstag der Anmeldung: 16.01.2013
(73) Patentinhaber: ZF Friedrichshafen AG, 88046 Friedrichshafen (DE)
(72) Erfinder: KALTENBACH, Johannes, 88048 Friedrichshafen (DE)
(86) Internationale Anmeldenummer: PCT/EP2011/057171
(87) Internationale Veröffentlichungsnummer: WO 2012/000706

(56) Entgegenhaltungen:
- EP-A1- 1 610 038
- EP-A1- 1 972 481
- EP-A1- 2 281 727
- EP-A2- 0 845 618
- EP-A2- 1 209 017
- DE-A1- 19 960 621
- DE-A1-102006 036 758
- FR-A1- 2 811 395
- US-A1- 2003 221 515
- US-A1- 2006 130 601

## Beschreibung

Die Erfindung betrifft einen Hybridantrieb eines Kraftfahrzeugs, der einen Verbrennungsmotor mit einer Triebwelle, eine als Motor und als Generator betreibbare Elektromaschine mit einem Rotor, und ein mehrstufiges Schaltgetriebe mit zwei Eingangswellen und einer gemeinsamen Ausgangswelle aufweist, wobei die erste Eingangswelle koaxial innerhalb der als Hohlwelle ausgebildeten zweiten Eingangswelle angeordnet ist, zumindest die erste Eingangswelle über eine steuerbare Reibungskupplung mit der Triebwelle des Verbrennungsmotors verbindbar ist, die zweite Eingangswelle mit dem Rotor der Elektromaschine in Triebverbindung steht, und beide Eingangswellen jeweils über mehrere schaltbare Gangradsätze mit unterschiedlicher Übersetzung selektiv mit der Ausgangswelle in Triebverbindung bringbar sind. Außerdem betrifft die Erfindung Verfahrensabläufe zur Steuerung des erfindungsgemäßen Hybridantriebs.

Es ist bereits bekannt, aus einem für ein Kraftfahrzeug vorgesehenen Doppelkupplungsgetriebe, das eingangsseitig über zwei Reibungskupplungen mit der Triebwelle eines Verbrennungsmotors verbindbar bzw. in Triebverbindung bringbar ist, durch die Anordnung einer als Motor und/oder Generator betreibbaren Elektromaschine an einer Eingangs-, Ausgangs-, oder Vorgelegewelle einen Hybridantrieb zu schaffen.

So sind z.B. in der DE 101 33 695 A1 mehrere Möglichkeiten zur Anordnung einer Elektromaschine bei unterschiedlichen Bauarten von Doppelkupplungsgetrieben offenbart. Beispielsweise kann die Elektromaschine koaxial am freien Ende einer Eingangswelle oder einer Vorgelegewelle angeordnet sein, wobei der Rotor unmittelbar drehfest mit der betreffenden Getriebewelle verbunden sein, oder im Fall einer Vorgelegewelle gegebenenfalls über deren Eingangskonstante mit der zugeordneten Eingangswelle in Triebverbindung stehen kann. Ebenso kann die Elektromaschine achsparallel zu einer Eingangswelle oder einer Vorgelegewelle angeordnet sein, wobei der Rotor über ein Stirnradgetriebe mit der betreffenden Getriebewelle in Triebverbindung stehen, oder im Fall einer Vorgelegewelle unter Nutzung der Zahnräder eines Gangradsatzes mit einer Eingangswelle in Triebverbindung stehen kann. Auch ist es möglich, dass die Elektromaschine koaxial über einer Eingangswelle oder einer Ausgangswelle angeordnet ist, wobei der hohl ausgebildete Rotor entweder unmittelbar drehfest mit der betreffenden Getriebewelle verbunden sein kann, oder im Fall einer Ausgangswelle unter Nutzung der Zahnräder eines Gangradsatzes mit einer benachbarten Vorgelegewelle und gegebenenfalls über deren Eingangskonstante mit der zugeordneten Eingangswelle in Triebverbindung stehen kann. Die FR 2 811 395 A1 zeigt einen Hybridantrieb gemäß dem Oberbegriff von Anspruch 1.

Die EP 2 281 727 A1 zeigt einen Hybridantrieb gemäß dem Oberbegriff von Anspruch 2.

Weitere Möglichkeiten zur Anordnung einer Elektromaschine innerhalb eines Doppelkupplungsgetriebes mit zwei koaxial übereinander angeordneten Eingangswellen und zwei koaxial übereinander angeordneten Vorgelegewellen sind aus der DE 10 2005 035 328 A1 bekannt.

Diese bekannten Ausführungen von Hybridantrieben weisen jedoch den Nachteil auf, dass mit der Anordnung der Elektromaschine die axialen und radialen Abmessungen des ursprünglichen Doppelkupplungsgetriebes nicht mehr eingehalten werden können. Wenn die Elektromaschine innerhalb des Getriebegehäuses angeordnet wird, ergibt sich zwangsläufig eine axiale oder radiale Erweiterung der Getriebeabmessungen, da das ursprüngliche Doppelkupplungsgetriebe zumeist möglichst kompakt aufgebaut und nicht für die Aufnahme eines zusätzlichen Aggregates ausgelegt ist. Zudem ist eine getriebeinterne Anordnung einer Elektromaschine im Hinblick auf eine Kapselung gegen eindringendes Getriebeöl, eine wirksame Kühlung und die Zugänglichkeit für Wartungs- und Reparaturarbeiten problematisch.

Bei einer getriebeexternen Anordnung der Elektromaschine, z.B. an einem nach außen verlängerten freien Ende einer Getriebewelle, sind die erforderlichen konstruktiven Änderungen an dem ursprünglichen Doppelkupplungsgetriebe zwar relativ gering. Der von einem derart ausgebildeten Hybridantrieb eingenommene Bauraum ist aber gegenüber dem ursprünglichen Doppelkupplungsgetriebe ebenfalls größer, wodurch die optionale Integration des Hybridantriebs in ein vorhandenes Kraftfahrzeug anstelle des ursprünglichen Doppelkupplungsgetriebes erschwert und oft nicht ohne aufwendige Änderungen an der Fahrzeugkarosserie möglich ist. Zudem entfallen bei einer getriebeexternen Anordnung der Elektromaschine die meisten der zuvor beschriebenen Anordnungsmöglichkeiten.

Des weiteren sind Schaltgetriebe mit einer integrierten Elektromaschine vorgeschlagen worden, die zwei eingangsseitige Getriebewellen, insbesondere zwei Vorgelegewellen, aufweisen, die jeweils über mehrere schaltbare Gangradsätze mit unterschiedlicher Übersetzung selektiv mit einer gemeinsamen Ausgangswelle in Triebverbindung bringbar sind. Diese Schaltgetriebe entsprechen in ihrem prinzipiellen Aufbau weitgehend einem Doppelkupplungsgetriebe. Jedoch ist jeweils nur eine eingangsseitige Getriebewelle über eine steuerbare Reibungskupplung unmittelbar oder mittelbar mit der Triebwelle eines Verbrennungsmotors verbindbar, und die andere eingangsseitige Getriebewelle steht mittelbar oder unmittelbar mit dem Rotor der Elektromaschine in Triebverbindung.

Bei einem ersten derartigen Hybridantrieb nach der US 6 645 105 B2 ist eine erste eingangsseitige Getriebewelle über eine Reibungskupplung mit der Triebwelle des Verbrennungsmotors verbindbar, wogegen die zweite eingangsseitige Getriebewelle über eine Eingangskonstante und ein als einfaches Planetengetriebe ausgebildetes Überlagerungsgetriebe mit dem Rotor der Elektromaschine und der ersten eingangsseitigen Getriebewelle in Triebverbindung steht. Für die Übertragung eines elektromotorischen oder verbrennungsmotorischen Drehmomentes über eine der zweiten eingangsseitigen Getriebewelle zugeordneten Gangstufe ist jeweils eine entsprechende Momentenabstützung innerhalb des Überlagerungsgetriebes durch den Verbrennungsmotor oder die Elektromaschine erforderlich. Zudem muss die Elektromaschine zur Erfüllung eines weiten Funktionsumfangs in beiden Drehrichtungen als Motor und als Generator betreibbar sein (Vier-Quadranten-Betrieb), was eine entsprechend aufwendige Ausbildung der Elektromaschine und deren Steuerung erfordert. Auch ist ein reiner Elektrofahrbetrieb mit abgestelltem Verbrennungsmotor und geöffneter Reibungskupplung mit diesem bekannten Hybridantrieb nicht möglich.

Bei einem weiteren derartigen Hybridantrieb nach der WO 2008/138387 A1 ist eine erste eingangsseitige Getriebewelle über eine Reibungskupplung mit der Triebwelle des Verbrennungsmotors verbindbar, wogegen die zweite eingangsseitige Getriebewelle unmittelbar drehfest mit dem Rotor der Elektromaschine verbunden ist. Um jeweils zumindest einige Gangstufen der jeweils anderen eingangsseitigen Getriebewelle für die Übertragung eines elektromotorischen bzw. verbrennungsmotorischen Drehmomentes nutzen zu können, sind zwei Gangradsätze der ersten und zweiten eingangsseitigen Getriebewelle jeweils in einer gemeinsamen Radialebene angeordnet und nutzen jeweils ein gemeinsames, als Losrad ausgebildetes und auf der gemeinsamen Ausgangswelle angeordnetes Zahnrad, wogegen die betreffenden, auf der zweiten eingangsseitigen Getriebewelle angeordneten Zahnräder als Festräder ausgebildet sind. Durch diese spezielle Anordnung von Festrädern und Losrädern ergeben sich Unterschiede, die bei einer Ableitung des Hybridantriebs aus einem weitgehend baugleichen Doppelkupplungsgetriebe erhebliche konstruktive Änderungen erfordern würden.

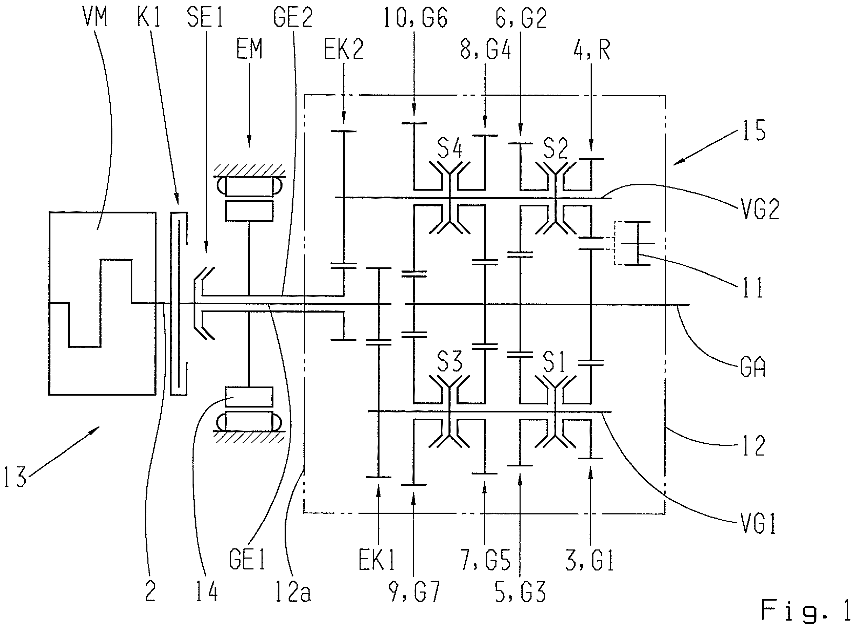

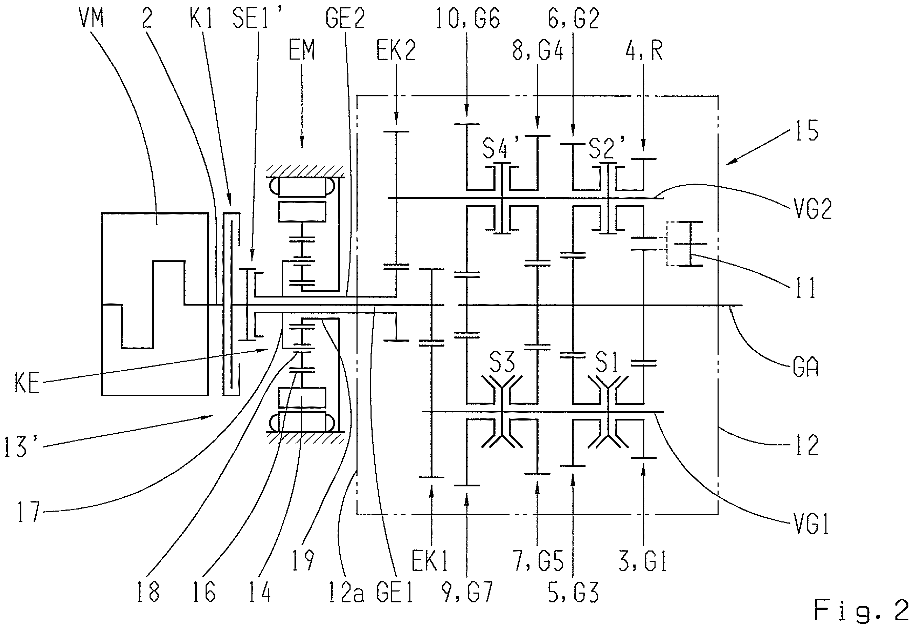

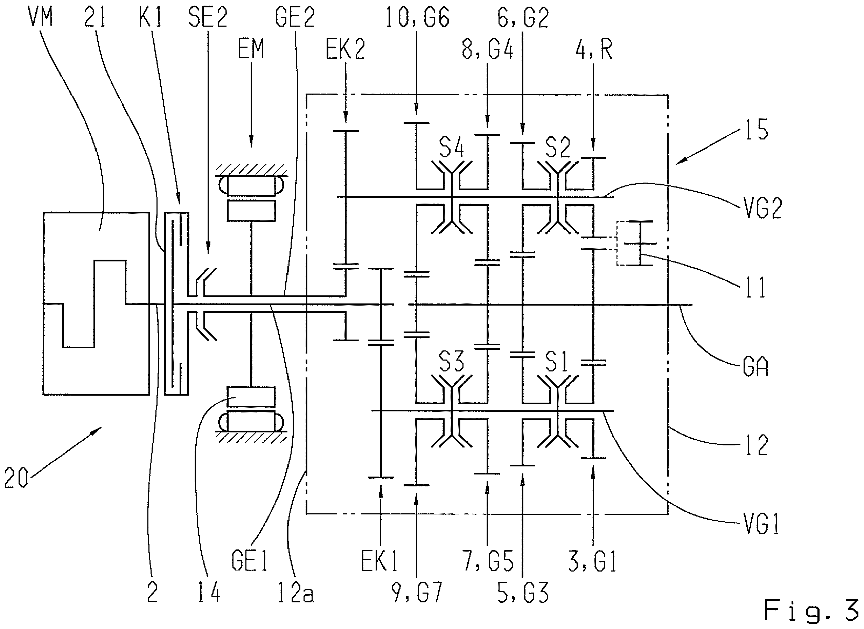

Schließlich sind in der DE 199 60 621 B4 drei Ausführungsformen eines derartigen Hybridantriebs beschrieben, bei denen eine erste Vorgelegewelle jeweils über eine erste Eingangskonstante, eine Eingangswelle und eine steuerbare Reibungskupplung mit der Triebwelle des Verbrennungsmotors in Triebverbindung bringbar ist. Eine zweite Vorgelegewelle ist entweder unmittelbar drehfest mit dem Rotor der Elektromaschine verbunden (siehe dortige Fig. 1) oder steht über eine zweite Eingangskonstante mit diesem in Triebverbindung (siehe dortige Figuren 2 und 3). Um jeweils zumindest einige Gangstufen der jeweils anderen Vorgelegewelle für die Übertragung eines elektromotorischen bzw. verbrennungsmotorischen Drehmomentes nutzen zu können, ist über eine aus- und einrückbare Schaltkupplung entweder die zweite Vorgelegewelle mit dem Abtriebsrad der zweiten Eingangskonstante verbindbar und über das Antriebsrad der zweiten Eingangskonstante mit der Eingangswelle koppelbar (siehe dortige Fig. 1), oder es ist das drehfest mit dem Rotor der koaxial über der Eingangswelle angeordneten Elektromaschine verbundene Antriebsrad der zweiten Eingangskonstante mit der Eingangswelle koppelbar (siehe dortige Figuren 2 und 3). Die Schaltkupplung ist jeweils auf der motorabgewandten Seite der zweiten Eingangskonstante und somit innerhalb des Schaltgetriebes angeordnet, wodurch sich gegenüber einem weitgehend baugleichen Doppelkupplungsgetriebe ein entsprechend hoher Änderungsaufwand und insbesondere bei der zweiten und dritten Ausführungsform dieses Hybridantriebs auch aufgrund der dort axial gestaffelten Anordnung der Eingangskonstanten eine axiale Erweiterung der Getriebeabmessungen ergibt.

Die bekannten Hybridantriebe weisen somit den wesentlichen Nachteil auf, dass sie entweder speziell entwickelte Schaltgetriebe oder mit hohem konstruktiven Aufwand aus Doppelkupplungsgetrieben abgeleitete Schaltgetriebe aufweisen, die erhöhte Herstellungskosten und/oder vergrößerte Abmessungen aufweisen. Hierdurch ist die Integration eines entsprechenden Hybridantriebs in ein bestehendes Kraftfahrzeug als Alternative zu einem konventionellen Antrieb deutlich erschwert bzw. nachteilig nur mit hohem konstruktivem und finanziellem Aufwand möglich.

Der vorliegenden Erfindung liegt daher die Aufgabe zugrunde, einen auf einem Doppelkupplungsgetriebe der eingangs genannten Art basierenden Hybridantrieb eines Kraftfahrzeugs vorzuschlagen, der einfach und Platz sparend aufgebaut sowie ohne große konstruktive Änderungen als alternativer Antrieb in ein Kraftfahrzeug integrierbar ist. Des Weiteren sollen Verfahrensabläufe zur Steuerung eines solchen erfindungsgemäßen Hybridantriebs angegeben werden.

Eine erste erfindungsgemäße Lösung der auf die konstruktive Ausbildung des Hybridantriebs bezogenen Aufgabe besteht in Verbindung mit den Merkmalen des Oberbegriffs des Anspruchs 1 darin, dass nur die erste Eingangswelle des Getriebes über eine zugeordnete Trennkupplung mit der Triebwelle des Verbrennungsmotors verbindbar ist, und dass die erste Eingangswelle sowie die zweite Eingangswelle über eine ein- und ausrückbare formschlüssige Schaltkupplung miteinander koppelbar sind.

Eine zweite erfindungsgemäße Lösung der auf die konstruktive Ausbildung des Hybridantriebs bezogenen Aufgabe besteht in Verbindung mit den Merkmalen des Oberbegriffs des unabhängigen Anspruchs 2 darin, dass nur die erste Eingangswelle über eine zugeordnete Trennkupplung mit der Triebwelle des Verbrennungsmotors verbindbar ist, und dass ein motorseitiger Teil der Trennkupplung und die zweite Eingangswelle über eine ein- und ausrückbare formschlüssige Schaltkupplung miteinander koppelbar sind. Die Elektromaschine und die Schaltkupplung sind bei beiden Lösungen außerhalb eines Getriebegehäuses des Schaltgetriebes zwischen der Trennkupplung und einer motorseitigen Stirnwand des Getriebegehäuses angeordnet und halten zusammen mit der Trennkupplung vorteilhaft in etwa den Bauraum einer Doppelkupplungsanordnung eines weitgehend baugleichen Doppelkupplungsgetriebes ein.

Die Trennkupplung ist insbesondere als Reibungskupplung, welche auch als Anfahrkupplung geeignet ist, ausgeführt.

Vorteilhafte Ausgestaltungen und Weiterbildungen des erfindungsgemäßen Hybridantriebs sind in den abhängigen Ansprüchen 3 bis 12 enthalten. Vorteilhafte Verfahrensabläufe zur Steuerung des erfindungsgemäßen Hybridantriebs sind in den unabhängigen Ansprüchen 13 und 14 sowie den zugeordneten verfahrensbezogenen abhängigen Ansprüchen 15 bis 21 angegeben.

Die Erfindung geht demnach aus von einem Hybridantrieb eines Kraftfahrzeugs, der einen Verbrennungsmotor mit einer Triebwelle, eine als Motor und als Generator betreibbare Elektromaschine mit einem Rotor, und ein mehrstufiges Schaltgetriebe mit zwei koaxial angeordneten Eingangswellen und einer gemeinsamen Ausgangswelle umfasst. Die erste Eingangswelle ist zentral innerhalb der als Hohlwelle ausgebildeten zweiten Eingangswelle angeordnet. Zumindest die erste Eingangswelle ist über eine zugeordnete Trennkupplung mit der Triebwelle des Verbrennungsmotors verbindbar. Die zweite Eingangswelle steht mit dem Rotor der Elektromaschine in Triebverbindung. Außerdem sind beide Eingangswellen jeweils über mehrere Gangradsätze mit unterschiedlicher Übersetzung und jeweils einer schaltbaren Gangkupplung selektiv mit der Ausgangswelle in Triebverbindung bringbar.

Der erfindungsgemäße Hybridantrieb basiert auf der Struktur eines weitgehend baugleichen Doppelkupplungsgetriebes, bei dem eine zweite Trennkupplung, über welche die zweite Eingangswelle üblicherweise mit der Triebwelle des Verbrennungsmotors verbindbar ist, weggelassen wird. Stattdessen steht die zweite Eingangswelle bei dem erfindungsgemäßen Hybridantrieb mit dem Rotor der Elektromaschine in Triebverbindung und ist über die vorgesehene Schaltkupplung mit der ersten Eingangswelle oder mit dem motorseitigen Teil der verbliebenen Trennkupplung, d.h. mit der Triebwelle des Verbrennungsmotors, koppelbar.

Hierdurch sind die beiden parallelen Kraftübertragungszweige eingangsseitig miteinander koppelbar und stehen somit beide in der ersten Ausführungsform des Hybridantriebs für den Verbrennungsmotor und die Elektromaschine sowie in der zweiten Ausführungsform des Hybridantriebs für den Verbrennungsmotor zur Kraftübertragung zur Verfügung.

Zur Realisierung des erfindungsgemäßen Hybridantriebs sind gegenüber dem Doppelkupplungsgetriebe nur vergleichsweise geringe konstruktive Änderungen erforderlich. Da diese Änderungen nur im außerhalb des Getriebegehäuses liegenden Bereich der Eingangswellen angesiedelt sind, kann das Basisgetriebe weitgehend unverändert von dem Doppelkupplungsgetriebe übernommen werden. Aufgrund des speziellen Aufbaus des Hybridantriebs kann die Elektromaschine zum Starten des Verbrennungsmotors, im Boostbetrieb, im Rekuperationsbetrieb, im reinen Elektrofahrbetrieb und zur Überbrückung einer schaltungsbedingten Zug- oder Schubkraftunterbrechung im Verbrennungsfahrbetrieb eingesetzt werden.

Die Schaltkupplung kann dabei als eine reibsynchronisierte Synchronkupplung ausgebildet sein. Es ist jedoch auch möglich, dass die Schaltkupplung als eine unsynchronisierte Klauenkupplung ausgebildet ist, die kostengünstiger herstellbar, kompakter und robuster ist. Je nach Schaltsituation kann die Synchronisierung der Schaltkupplung über die Elektromaschine oder den Verbrennungsmotor erfolgen, in der ersten Ausführungsform des Hybridantriebs in Verbindung mit einem zumindest teilweisen Schließen der Trennkupplung.

Da die Elektromaschine auch zur Synchronisierung von Gangkupplungen verwendbar ist, können zumindest die Gangkupplungen der der zweiten Eingangswelle zugeordneten Gangradsätze als unsynchronisierte Klauenkupplungen ausgebildet sein.

Um den vorhandenen Bauraum optimal auszunutzen ist die Elektromaschine bevorzugt koaxial über der zweiten Eingangswelle angeordnet, wobei der Rotor der Elektromaschine unmittelbar drehfest mit der zweiten Eingangswelle verbunden sein oder über eine Getriebestufe mit der zweiten Eingangswelle in Triebverbindung stehen kann.

Die Getriebestufe ist in diesem Fall zweckmäßig als ein einfaches Planetengetriebe mit einem Hohlrad, einem Planetenträger mit mehreren mit dem Hohlrad in Verzahnungseingriff stehenden Planetenrädern, und einem mit den Planetenrädern in Verzahnungseingriff stehenden Sonnenrad ausgebildet, wobei das Hohlrad drehfest mit dem Rotor der Elektromaschine verbunden ist, der Planetenträger drehfest an der zweiten Eingangswelle befestigt ist, und das Sonnenrad gehäusefest arretiert ist.

Es ist jedoch auch möglich, dass die Elektromaschine EM achsparallel zu der zweiten Eingangswelle angeordnet ist, und dass der Rotor der Elektromaschine über eine Getriebestufe mit der zweiten Eingangswelle in Triebverbindung steht.

In diesem Fall kann die Getriebestufe als ein Stirnradgetriebe mit einem drehfest mit dem Rotor der Elektromaschine verbundenen ersten Zahnrad und einem drehfest mit der zweiten Eingangswelle verbundenen sowie mit dem ersten Zahnrad in Verzahnungseingriff stehenden zweiten Zahnrad ausgebildet sein.

Möglich ist es auch, dass die Getriebestufe als ein Kettengetriebe mit einem drehfest mit dem Rotor der Elektromaschine verbundenen ersten Kettenrad und einem drehfest auf der zweiten Eingangswelle angeordneten sowie über eine geschlossene Gliederkette formschlüssig mit dem ersten Kettenrad in Triebverbindung stehenden zweiten Kettenrad ausgebildet ist.

Eine weitere Möglichkeit besteht darin, dass die Getriebestufe als ein Riemengetriebe mit einer drehfest mit dem Rotor der Elektromaschine verbundenen ersten Riemenscheibe und einer drehfest auf der zweiten Eingangswelle angeordneten sowie über einen geschlossenen Treibriemen kraftschlüssig mit der ersten Riemenscheibe in Triebverbindung stehenden zweiten Riemenscheibe ausgebildet ist.

Unabhängig von der Anordnung der Elektromaschine und der Ausbildung der Getriebestufe weist die Getriebestufe zweckmäßig eine Übersetzung im Bereich zwischen i_{KE} = 1,25 und i_{KE} = 1,67 auf, da die Elektromaschine hierdurch leistungsschwächer und entsprechend kompakter sowie leichter ausgebildet sein kann, ohne dass die damit verbundene Erhöhung der Betriebsdrehzahlen der Elektromaschine zu kritisch hohen Werten führt.

Bei der geschilderten ersten Ausführungsform des erfindungsgemäßen Hybridantriebs ist verfahrensgemäß zum Impulsstart des Verbrennungsmotors vorgesehen, dass bei geöffneter Trennkupplung und ausgelegten Gängen G1 - G7, R zunächst die Schaltkupplung eingerückt und dann die zweite Eingangswelle durch die Elektromaschine bis auf eine vorgegebene, oberhalb der Startdrehzahl des Verbrennungsmotors liegende Impulsstartdrehzahl beschleunigt wird, und dass der Verbrennungsmotor dann durch ein schnelles Schließen der Trennkupplung mittels des Drehimpulses der Elektromaschine gestartet wird.

Bei beiden Ausführungsformen des erfindungsgemäßen Hybridantriebs ist zum normalen Elektrostart des Verbrennungsmotors vorgesehen, dass bei geöffneter Trennkupplung und ausgelegten Gängen G1 - G7, R die Schaltkupplung eingerückt und bedarfsweise, d.h. bei der ersten Ausführungsform des Hybridantriebs, die Trennkupplung geschlossen wird, und dass der Verbrennungsmotor dann mittels des Antriebsmomentes der Elektromaschine gestartet wird.

Zum Boostbetrieb ist vorgesehen, dass bedarfsweise, d.h. wenn der Kraftfluss von dem Verbrennungsmotor aktuell über einen der ersten Eingangswelle zugeordneten Gang G1, G3, G5, G7 erfolgt, zunächst ein der zweiten Eingangswelle zugeordneter Vorwärtsgang G2, G4, G6 eingelegt oder die Schaltkupplung eingerückt wird, und dass die Elektromaschine dann als Motor betrieben wird, d.h. ein Antriebsmoment abgibt.

In gleicher Weise ist zum Rekuperationsbetrieb vorgesehen, dass bedarfsweise zunächst ein der zweiten Eingangswelle zugeordneter Vorwärtsgang G2, G4, G6 eingelegt oder die Schaltkupplung eingerückt wird, und dass die Elektromaschine dann als Generator betrieben wird, d.h. ein im Antriebsstrang als Schleppmoment wirksames Generatormoment aufnimmt.

Zum Elektrofahrbetrieb ist vorgesehen, dass bei geöffneter Trennkupplung, ausgerückter Schaltkupplung und ausgelegten Gängen G1 - G7, R zunächst ein der zweiten Eingangswelle zugeordneter Gang G2, G4, G6, R eingelegt wird, und dass die Elektromaschine dann als Motor betrieben wird, d.h. ein Antriebsmoment abgibt.

Bei einer während eines Verbrennungsfahrbetriebs erfolgenden Schaltung von einem Lastgang, z.B. G3, in einen Zielgang, z.B. G5, die beide der ersten Eingangswelle zugeordnet sind, ist zur Vermeidung einer Zugkraftunterbrechung vorgesehen, dass zunächst ein der zweiten Eingangswelle zugeordneter Zwischengang, z.B. G4, synchronisiert und eingelegt wird, und dass dann zeitlich überschnitten ein Motormoment der Elektromaschine aufgebaut, das Motormoment des Verbrennungsmotors abgebaut wird, sowie die Trennkupplung geöffnet wird. Daraufhin wird der Lastgang G3 ausgelegt sowie der Zielgang G5 synchronisiert und eingelegt, bevor zeitlich überschnitten das Motormoment der Elektromaschine wieder abgebaut, das Motormoment des Verbrennungsmotors wieder aufgebaut sowie die Trennkupplung geschlossen wird. Abschließend wird der Zwischengang G4 wieder ausgelegt. Die Schaltkupplung ist während dieses Schaltungsablaufs permanent ausgerückt.

Bei einer während eines Verbrennungsfahrbetriebs erfolgenden Schaltung von einem der ersten Eingangswelle zugeordneten Lastgang, z.B. G3, in einen der zweiten Eingangswelle zugeordneten Zielgang, z.B. G4, ist zur Vermeidung einer Zugkraftunterbrechung vorgesehen, dass zunächst der Zielgang G4 synchronisiert und eingelegt wird, und dass dann zeitlich überschnitten ein Motormoment der Elektromaschine aufgebaut, das Motormoment des Verbrennungsmotors abgebaut sowie die Trennkupplung geöffnet wird. Daraufhin wird der Lastgang G3 ausgelegt und die Schaltkupplung synchronisiert und eingerückt, bevor zeitlich überschnitten das Motormoment der Elektromaschine wieder abgebaut, das Motormoment des Verbrennungsmotors wieder aufgebaut, sowie bedarfsweise, d.h. bei der ersten Ausführungsform des erfindungsgemäßen Hybridantriebs, die Trennkupplung geschlossen wird.

Bei einer während eines Verbrennungsfahrbetriebs erfolgenden Schaltung von einem der zweiten Eingangswelle zugeordneten Lastgang, z.B. G4, in einen der ersten Eingangswelle zugeordneten Zielgang, z.B. G5, ist zur Vermeidung einer Zugkraftunterbrechung vorgesehen, dass zunächst zeitlich überschnitten ein Motormoment der Elektromaschine aufgebaut, das Motormoment des Verbrennungsmotors abgebaut sowie die Schaltkupplung ausgerückt und bedarfsweise, d.h. bei der ersten Ausführungsform des erfindungsgemäßen Hybridantriebs, die Trennkupplung geöffnet wird. Daraufhin wird der Zielgang G5 synchronisiert und eingelegt, bevor zeitlich überschnitten das Motormoment der Elektromaschine wieder abgebaut, das Motormoment des Verbrennungsmotors wieder aufgebaut sowie die Trennkupplung geschlossen wird. Abschließend wird der Lastgang G4 ausgelegt.

Bei einer während eines Verbrennungsfahrbetriebs erfolgenden Schaltung von einem Lastgang, z.B. G4, in einen Zielgang, z.B. G6, die beide der zweiten Eingangswelle zugeordnet sind, ist zur Vermeidung einer Zugkraftunterbrechung vorgesehen, dass zunächst zeitlich überschnitten ein Motormoment der Elektromaschine aufgebaut, das Motormoment des Verbrennungsmotors abgebaut sowie die Schaltkupplung ausgerückt und bedarfsweise, d.h. bei der ersten Ausführungsform des erfindungsgemäßen Hybridantriebs, die Trennkupplung geöffnet wird. Daraufhin wird ein der ersten Eingangswelle zugeordneter Zwischengang, z.B. G5, synchronisiert und eingelegt, bevor zeitlich überschnitten das Motormoment der Elektromaschine wieder abgebaut, das Motormoment des Verbrennungsmotors wieder aufgebaut sowie die Trennkupplung geschlossen wird. Dann wird der Lastgang G4 ausgelegt sowie der Zielgang G6 synchronisiert und eingelegt. Anschließend wird zeitlich überschnitten ein Motormoment der Elektromaschine aufgebaut, das Motormoment des Verbrennungsmotors abgebaut sowie die Trennkupplung geöffnet. Daraufhin wird der Zwischengang G5 wieder ausgelegt und die Schaltkupplung synchronisiert und eingerückt, bevor zeitlich überschnitten das Motormoment der Elektromaschine wieder abgebaut, das Motormoment des Verbrennungsmotors wieder aufgebaut, sowie bedarfsweise, d.h. bei der ersten Ausführungsform des erfindungsgemäßen Hybridantriebs, die Trennkupplung geschlossen wird.

Es versteht sich in Kenntnis der Erfindung von selbst, dass die zuvor für einen Zugbetrieb des Verbrennungsmotors beschriebenen Schaltungsabläufe in gleicher Weise bei einem Schubbetrieb des Verbrennungsmotors durchführbar sind, wobei das Motormoment des Verbrennungsmotors dann ein Schleppmoment und das Motormoment der Elektromaschine ein als Schleppmoment wirksames Generatormoment ist.

Zur Verdeutlichung der Erfindung ist der Beschreibung eine Zeichnung mit Ausführungsbeispielen beigefügt. In dieser zeigt
- Fig. 1: eine erste Ausführungsform eines erfindungsgemäßen Hybridantriebs in einer schematischen Darstellung,
- Fig. 2: eine Weiterbildung der ersten Ausführung des Hybridantriebs nach Fig. 1,
- Fig. 3: eine zweite Ausführungsform eines erfindungsgemäßen Hybridantriebs in einer schematischen Darstellung,
- Fig. 4: eine Weiterbildung der zweiten Ausführung des Hybridantriebs nach Fig. 3, und
- Fig. 5: ein Doppelkupplungsgetriebe, aus dem die zwei Ausführungsformen des Hybridantriebs nach Fig. 1 bis 4 abgeleitet sind, in einer schematischen Darstellung.

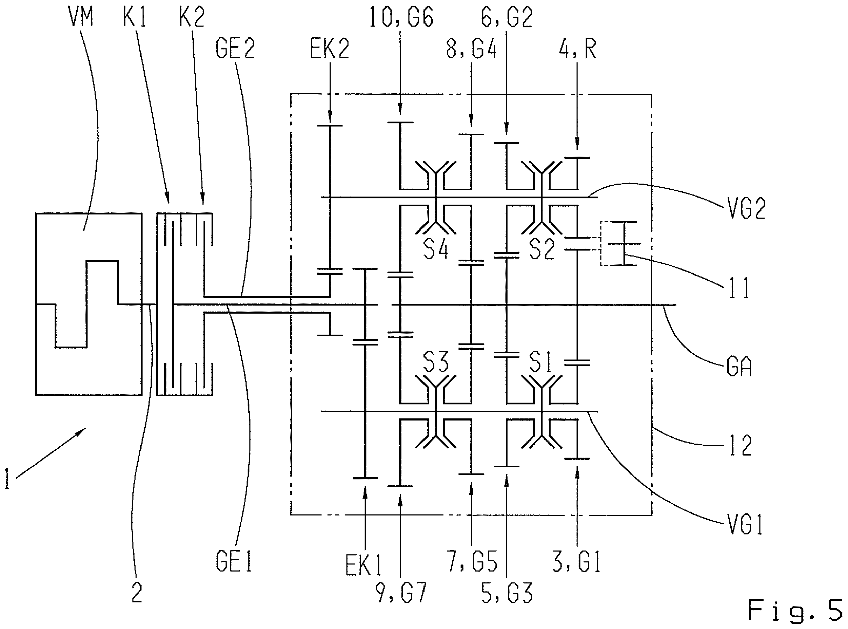

In Fig. 5 ist demnach in schematischer Form ein Doppelkupplungsgetriebe 1 abgebildet, aus dem die nachfolgend beschriebenen Ausführungen und Abwandlungen eines erfindungsgemäßen Hybridantriebs eines Kraftfahrzeugs abgeleitet sind. Das Doppelkupplungsgetriebe 1 weist zwei koaxial angeordnete Eingangswellen GE1, GE2 und eine gemeinsame Ausgangswelle GA auf. Die erste Eingangswelle GE1 ist zentral innerhalb der als Hohlwelle ausgebildeten zweiten Eingangswelle GE2 angeordnet. Beide Eingangswellen GE1, GE2 sind eingangsseitig über jeweils eine zugeordnete Trennkupplung K1, K2 mit der Triebwelle 2 eines Verbrennungsmotors VM verbindbar. Die Trennkupplungen K1, K2 in Fig. 5 sind als Reibungskupplungen ausgeführt. Ausgangsseitig stehen beide Eingangswellen GE1, GE2 beispielhaft über jeweils eine aus zwei Festrädern gebildete Eingangskonstante EK1, EK2 mit einer zugeordneten Vorgelegewelle VG1, VG2 in Triebverbindung.

Jede Vorgelegewelle VG1, VG2 ist über mehrere Gangradsätze 3, 5, 7, 9 bzw. 4, 6, 8, 10 mit unterschiedlicher Übersetzung selektiv mit der gemeinsamen Ausgangswelle GA in Triebverbindung bringbar. Die der ersten Eingangswelle GE1 und der zweiten Eingangswelle GE2 zugeordneten Gangradsätze 3, 5, 7, 9 bzw. 4, 6, 8, 10 bestehen jeweils aus einem auf der zugeordneten Vorgelegewelle VG1, VG2 drehbar gelagerten und über eine Gangkupplung mit dieser koppelbaren Losrad sowie jeweils einem drehfest auf der Ausgangswelle GA befestigten Festrad. Hierdurch ergeben sich insgesamt sieben Vorwärtsgänge G1 bis G7 und in Verbindung mit einem Zwischenrad 11 ein Rückwärtsgang R.

Die Gangkupplungen der Gangradsätze sind als reibsynchronisierte Synchronkupplungen ausgebildet und jeweils paarweise in Schaltpaketen S1, S2, S3, S4 zusammengefasst. Zudem sind die Gangradsätze 3, 5, 7, 9 bzw. 4, 6, 8, 10 beider Vorgelegewellen VG1, VG2 vorliegend beispielhaft jeweils paarweise in einer gemeinsamen Radialebene angeordnet und nutzen jeweils ein gemeinsames Festrad auf der Ausgangswelle GA. Die getriebeseitigen Abschnitte der Eingangswellen GE1, GE2, die Eingangskonstanten EK1, EK2, die beiden Vorgelegewellen VG1, VG2, die Gangradsätze 3, 5, 7, 9 bzw. 4, 6, 8, 10 mit den Schaltpaketen S1 - S4 und der getriebeseitige Abschnitt der Ausgangswelle GA sind innerhalb eines Getriebegehäuses 12 angeordnet.

Die in Fig. 1 dargestellte Ausbildung dieser Bauteile hat für die vorliegende Erfindung bis auf die Funktion der selektiv herstellbaren Triebverbindung zwischen den koaxialen Eingangswellen GE1, GE2 und der Ausgangswelle GA nur Beispielcharakter. Die getriebeinterne Ausbildung und Anordnung der Bauteile, wie z.B. die Lage der Ausgangswelle GA relativ zu den Eingangswellen GE1, GE2, die Verwendung und Anordnung von Vorgelegewellen VG1, VG2, und die Ausbildung sowie Anordnung der Gangradsätze 3, 5, 7, 9 bzw. 4, 6, 8, 10 kann somit auch beliebig anders gestaltet sein.

Ausgehend von dem Doppelkupplungsgetriebe 1 nach Fig. 5 ist eine erste Ausführungsform eines erfindungsgemäßen Hybridantriebs 13 nach Fig. 1 dadurch geschaffen, dass die zweite Trennkupplung K2 weggelassen wird, dass eine als Motor und als Generator betreibbare Elektromaschine EM vorgesehen ist, deren Rotor 14 mit der zweiten Eingangswelle GE2 in Triebverbindung steht, und dass eine ein- und ausrückbare formschlüssige Schaltkupplung SE1 vorgesehen ist, über die beide Eingangswellen GE1, GE2 miteinander koppelbar sind.

Das eigentliche Schaltgetriebe 15, d.h. die innerhalb des Getriebegehäuses 12 angeordneten Bauteile, wie die Eingangskonstanten EK1, EK2, die Vorgelegewellen VG1, VG2, die Gangradsätze 3 bis 10, die Schaltkupplungen S1 - S4 und die Ausgangswelle GA, ist gegenüber dem Doppelkupplungsgetriebe 1 weitgehend unverändert.

Bei dieser Ausführungsform des Hybridantriebs 13 ist die Elektromaschine EM koaxial über der zweiten Eingangswelle GE2 angeordnet und der Rotor 14 der Elektromaschine EM unmittelbar drehfest mit der zweiten Eingangswelle GE2 verbunden. Die Schaltkupplung SE1 ist vorliegend beispielhaft als eine reibsynchronisierte Synchronkupplung ausgebildet. Die Elektromaschine EM und die Schaltkupplung SE1 sind außerhalb des Getriebegehäuses 12 zwischen der verbliebenen Trennkupplung K1 und einer motorseitigen Stirnwand 12a des Getriebegehäuses 12 angeordnet und halten zusammen mit der Trennkupplung K1 in etwa den Bauraum einer Doppelkupplungsanordnung K1, K2 des weitgehend baugleichen Doppelkupplungsgetriebes 1 nach Fig. 5 ein. Die Trennkupplung K1 in den Fg. 1 bis 4 ist als Reibungskupplung ausgeführt.

Eine in Fig. 2 dargestellte Weiterbildung des erfindungsgemäßen Hybridantriebs 13' unterscheidet sich von dem Hybridantrieb 13 nach Fig. 1 dadurch, dass die Schaltkupplung SE1' nunmehr als eine unsynchronsierte Klauenkupplung ausgebildet ist, dass der Rotor 14 der Elektromaschine EM nunmehr über eine Getriebestufe KE mit der zweiten Eingangswelle GE2 in Triebverbindung steht, und dass die Gangkupplungen S2', S4' der der zweiten Eingangswelle GE2 zugeordneten Gangradsätze 4, 6, 8, 10 nunmehr als unsynchronisierte Klauenkupplungen ausgebildet sind.

Die Getriebestufe KE ist als ein einfaches Planetengetriebe mit einem Hohlrad 16, einem Planetenträger 17 mit mehreren mit dem Hohlrad 16 in Verzahnungseingriff stehenden Planetenrädern 18 und einem mit den Planetenrädern 18 in Verzahnungseingriff stehenden Sonnenrad 19 ausgebildet. Das Hohlrad 16 ist drehfest mit dem Rotor 14 der Elektromaschine EM verbunden, der Planetenträger 17 ist drehfest auf der zweiten Eingangswelle GE2 befestigt, und das Sonnenrad 19 ist gehäusefest arretiert. Die Getriebestufe KE weist somit eine Übersetzung im Bereich zwischen i_{KE} = 1,25 und i_{KE} = 1,67 auf. Hierdurch kann die Elektromaschine EM entsprechend leistungsschwächer und demzufolge kompakter sowie leichter ausgebildet sein, ohne kritisch hohe Betriebsdrehzahlen aufzuweisen.

Ausgehend von dem Doppelkupplungsgetriebe 1 nach Fig. 5 ist eine zweite Ausführungsform eines erfindungsgemäßen Hybridantriebs 20 nach Fig. 3 dadurch geschaffen, dass die zweite Trennkupplung K2 weggelassen wird, dass eine als Motor und als Generator betreibbare Elektromaschine EM vorgesehen ist, deren Rotor 14 mit der zweiten Eingangswelle GE2 in Triebverbindung steht, und dass eine ein- und ausrückbare formschlüssige Schaltkupplung SE2 vorgesehen ist, über die ein motorseitiger Teil 21 der verbliebenen Trennkupplung K1, wie z.B. ein Kupplungskorb, und die zweite Eingangswelle GE2 miteinander koppelbar sind.

Wie bei der ersten Ausführungsform des Hybridantriebs 13 nach Fig. 1 ist die Elektromaschine EM gemäß Fig. 3 koaxial über der zweiten Eingangswelle GE2 angeordnet und der Rotor 14 der Elektromaschine EM ist unmittelbar drehfest mit der zweiten Eingangswelle GE2 verbunden. Die Schaltkupplung SE2 ist vorliegend beispielhaft als eine reibsynchronisierte Synchronkupplung ausgebildet. Die Elektromaschine EM und die Schaltkupplung SE2 sind wiederum außerhalb des Getriebegehäuses 12 zwischen der verbliebenen Trennkupplung K1 sowie der motorseitigen Stirnwand 12a des Getriebegehäuses 12 angeordnet und halten zusammen mit der Trennkupplung K1 ebenfalls in etwa den Bauraum der Doppelkupplungsanordnung K1, K2 des weitgehend baugleichen Doppelkupplungsgetriebes 1 nach Fig. 5 ein.

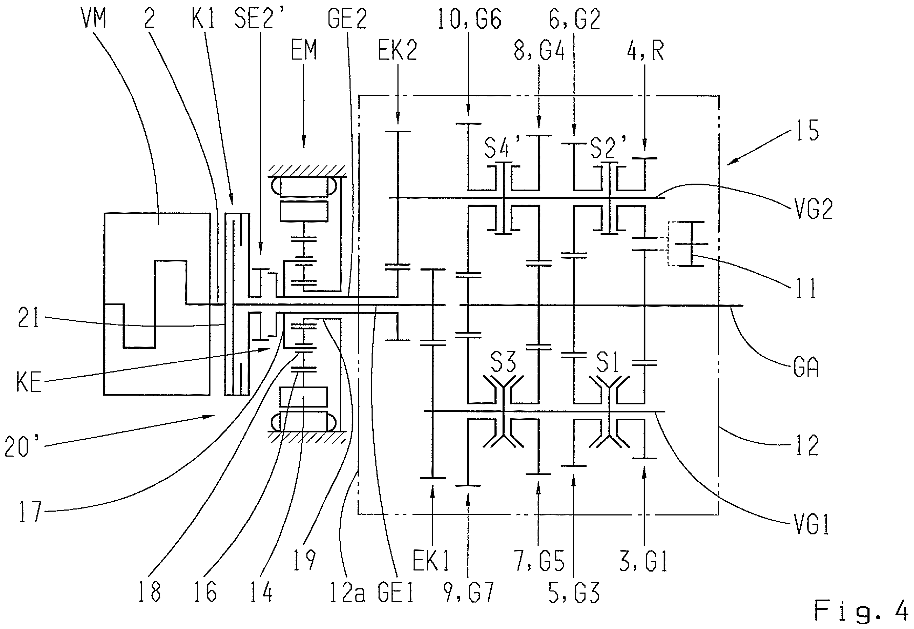

Eine in Fig. 4 abgebildete Weiterbildung des erfindungsgemäßen Hybridantriebs 20' unterscheidet sich von dem Hybridantrieb 20 nach Fig. 3 dadurch, dass die Schaltkupplung SE2' nunmehr als eine unsynchronsierte Klauenkupplung ausgebildet ist, dass der Rotor 14 der Elektromaschine EM, wie bei dem Hybridantrieb 13' nach Fig. 2, über eine als einfaches Planetengetriebe ausgebildete Getriebestufe KE mit der zweiten Eingangswelle GE2 in Triebverbindung steht, und dass die Gangkupplungen S2', S4' der der zweiten Eingangswelle GE2 zugeordneten Gangradsätze 4, 6, 8, 10 ebenfalls als unsynchronisierte Klauenkupplungen ausgebildet sind.

Mit den zuvor beschriebenen Ausführungsformen ist ein konstruktiv auf einem Doppelkupplungsgetriebe 1 basierender parallel-wirksamer Hybridantrieb 13, 13', 20, 20' geschaffen, der eine Elektromaschine EM und ein automatisiertes Schaltgetriebe 15 mit zwei Kraftübertragungszweigen umfasst. Die innerhalb des Getriebegehäuses 12 angeordneten Bauteile, wie die Eingangskonstanten EK1, EK2, die Vorgelegewellen VG1, VG2, die Gangradsätze 3, 5, 7, 9 bzw. 4, 6, 8, 10 mit den Gangkupplungen S1, S3 bzw. S2, S4 und die Ausgangswelle GA, gegebenenfalls auch das Getriebegehäuse 12 selbst, können weitgehend unverändert von dem ursprünglichen Doppelkupplungsgetriebe 1 übernommen werden.

Durch den Wegfall der zweiten Trennkupplung K2 und die Anordnung der Elektromaschine EM sowie der zusätzlichen Schaltkupplung SE1, SE1' bzw. SE2, SE2' zwischen der verbleibenden Trennkupplung K1 und der motorseitigen Stirnwand 12a des Getriebegehäuses 12 kann der Bauraum des ursprünglichen Doppelkupplungsgetriebes 1 weitgehend eingehalten werden. Der erfindungsgemäße Hybridantrieb 13, 13' bzw. 20, 20' ist somit kostengünstig herstellbar und kann ohne wesentliche Änderungen an dem betreffenden Kraftfahrzeug alternativ zu dem konventionellen Antrieb mit dem Doppelkupplungsgetriebe 1 verwendet werden.

Der Funktionsumfang des erfindungsgemäßen Hybridantriebs 13, 13' bzw. 20, 20' beinhaltet ein Starten des Verbrennungsmotors VM mittels der Elektromaschine EM. In der ersten Ausführungsform des Hybridantriebs 13, 13' ist auch ein Impulsstart des Verbrennungsmotors VM möglich. Des Weiteren ist ein Boost- und Rekuperationsbetrieb der Elektromaschine EM während eines Verbrennungsfahrbetriebs möglich. Ein reiner Elektrofahrbetrieb ist bei der ersten Ausführungsform 13, 13' über alle Gänge G1, G3, G5, G7 bzw. G2, G4, G6, R und bei der zweiten Ausführungsform 20, 20' nur über die der zweiten Eingangswelle GE2 zugeordneten Gänge G2, G4, G6, R möglich.

Im Verbrennungsfahrbetrieb sind bei beiden Ausführungsformen 13, 13' bzw. 20, 20' alle Gänge G1, G3, G5, G7 bzw. G2, G4, G6, R nutzbar, wobei eine schaltungsbedingte Zug- bzw. Schubkraftunterbrechung durch eine vorübergehende Lastübernahme durch die Elektromaschine EM vermieden werden kann. Bei einer unsynchronisierten Ausführung der Gangkupplungen bzw. Schaltpakete S2', S4' und der jeweiligen Schaltkupplung SE1', SE2' gemäß den Ausführungsformen des Hybridantriebs 13', 20' nach Fig. 2 und Fig. 4 werden diese vor dem Einrücken jeweils durch die Elektromaschine EM bzw. durch die Elektromaschine EM oder den Verbrennungsmotor VM synchronisiert.

### Bezugszeichen

- 1: Doppelkupplungsgetriebe
- 2: Triebwelle des Verbrennungsmotors
- 3, 5, 7, 9: Gangradsätze
- 4, 6, 8, 10: Gangradsätze
- 11: Zwischenrad
- 12: Getriebegehäuse
- 12a: Motorseitige Stirnwand des Getriebegehäuses
- 13: Hybridantrieb
- 13': Hybridantrieb
- 14: Rotor der Elektromaschine
- 15: Schaltgetriebe
- 16: Hohlrad
- 17: Planetenträger
- 18: Planetenrad
- 19: Sonnenrad
- 20: Hybridantrieb
- 20': Hybridantrieb
- 21: Motorseitiger Teil der ersten Trennkupplung
- EK1: Erste Eingangskonstante
- EK2: Zweite Eingangskonstante
- EM: Elektromaschine
- G1 - G7: Vorwärtsgänge
- GA: Ausgangswelle
- GE1: Erste Eingangswelle
- GE2: Zweite Eingangswelle
- i_{KE}: Übersetzung der Getriebestufe KE
- K1: Erste Trennkupplung
- K2: Zweite Trennkupplung
- KE: Getriebestufe
- R: Rückwärtsgang
- S1, S3: Schaltpakete
- S2, S4: Schaltpakete
- S2', S4': Schaltpakete
- SE1: Schaltkupplung
- SE1': Schaltkupplung
- SE2: Schaltkupplung
- SE2': Schaltkupplung
- VM: Verbrennungsmotor
- VG1: Erste Vorgelegewelle
- VG2: Zweite Vorgelegewelle

## Patentansprüche

1. Hybridantrieb eines Kraftfahrzeugs, der einen Verbrennungsmotor (VM) mit einer Triebwelle (2), eine als Motor und als Generator betreibbare Elektromaschine (EM) mit einem Rotor (14), und ein mehrstufiges Schaltgetriebe (15) mit zwei koaxial angeordneten Eingangswellen (GE1, GE2) und einer gemeinsamen Ausgangswelle (GA) umfasst, wobei die erste Eingangswelfe (GE1) zentral innerhalb der als Hohlwelle ausgebildeten zweiten Eingangswelle (GE2) angeordnet ist, zumindest die erste Eingangswelle (GE1) über eine zugeordnete Trennkupplung (K1) mit der Triebwelle (2) des Verbrennungsmotors (VM) verbindbar ist, die zweite Eingangswelle (GE2) mit dem Rotor (14) der Elektromaschine (EM) in Triebverbindung steht, und beide Eingangswellen (GE1, GE2) jeweils über mehrere Gangradsätze (3, 5, 7, 9; 4, 6, 8, 10) mit unterschiedlicher Übersetzung und jeweils einer schaltbaren Gangkupplung (S1, S3; S2, S4) selektiv mit der Ausgangswelle (GA) in Triebverbindung bringbar sind, wobei nur die erste Eingangswelle (GE1) über die zugeordnete Trennkupplung (K1) mit der Triebwelle (2) des Verbrennungsmotors (VM) verbindbar ist, und wobei die erste Eingangswelle (GE1) und die zweite Eingangswelle (GE2) über eine ein- und ausrückbare formschlüssige Schaltkupplung (SE1, SE1') miteinander koppelbar sind, **dadurch gekennzeichnet, dass** die Elektromaschine (EM) und die Schaltkupplung (SE1, SE1'; SE2, SE2') außerhalb eines Getriebegehäuses (12) des Schaltgetriebes (15) zwischen der Trennkupplung (K1) und einer motorseitigen Stirnwand (12a) des Getriebegehäuses (12) angeordnet sind.

2. Hybridantrieb eines Kraftfahrzeugs, der einen Verbrennungsmotor (VM) mit einer Triebwelle (2), eine als Motor und als Generator betreibbare Elektromaschine (EM) mit einem Rotor (14), und ein mehrstufiges Schaltgetriebe (15) mit zwei koaxial angeordneten Eingangswelle (GE1, GE2) und einer gemeinsamen Ausgangswelle (GA) umfasst, wobei die erste Eingangswelle (GE1) zentral innerhalb der als Hohlwelle ausgebildeten zweiten Eingangswelle (GE2) angeordnet ist, zumindest die erste Eingangswelle (GE1) über eine zugeordnete Trennkupplung (K1) mit der Triebwelle (2) des Verbrennungsmotors (VM) verbindbar ist, die zweite Eingangswelle (GE2) mit dem Rotor (14) der Elektromaschine (EM) in Triebverbindung steht, und beide Eingangswellen (GE1, GE2) jeweils über mehrere Gangradsätze (3, 5, 7, 9; 4, 6, 8, 10) mit unterschiedlicher Übersetzung und jeweils einer schaltbaren Gangkupplung (S1, S3; S2, S4) selektiv mit der Ausgangswelle (GA) in Triebverbindung bringbar sind, wobei nur die erste Eingangswelle (GE1) über die zugeordnete Trennkupplung (K1) mit der Triebwelle (2) des Verbrennungsmotors (VM) verbindbar ist, und wobei ein motorseitiger Teil (21) der Trennkupplung (K1) und die zweite Eingangswelle (GE2) über eine ein- und ausrückbare formschlüssige Schaltkupplung (SE2, SE2') miteinander koppelbar sind, **dadurch gekennzeichnet, dass** die Elektromaschine (EM) und die Schaltkupplung (SE1, SE1'; SE2, SE2') au-βerhalb eines Getriebegehäuses (12) des Schaltgetriebes (15) zwischen der Trennkupplung (K1) und einer motorseitigen Stirnwand (12a) des Getriebegehäuses (12) angeordnet sind.

3. Hybridantrieb nach Anspruch 1 oder 2, **dadurch gekennzeichnet, dass** die Schaltkupplung (SE1, SE2) als eine reibsynchronisierte Synchronkupplung ausgebildet ist.

4. Hybridantrieb nach Anspruch 1 oder 2, **dadurch gekennzeichnet, dass** die Schaltkupplung (SE1', SE2') als eine unsynchronsierte Klauenkupplung ausgebildet ist.

5. Hybridantrieb nach einem der Ansprüche 1 bis 4, **dadurch gekennzeichnet, dass** zumindest die Gangkupplungen (S2', S4') der der zweiten Eingangswelle (GE2) zugeordneten Gangradsätze (4, 6, 8, 10) als unsynchronisierte Klauenkupplungen ausgebildet sind.

6. Hybridantrieb nach einem der Ansprüche 1 bis 5, **dadurch gekennzeichnet, dass** die Elektromaschine (EM) koaxial über der zweiten Eingangswelle (GE2) angeordnet ist, und dass der Rotor (14) der Elektromaschine (EM) unmittelbar drehfest mit der zweiten Eingangswelle (GE2) verbunden ist oder über eine Getriebestufe (KE) mit der zweiten Eingangswelle (GE2) in Triebverbindung steht.

7. Hybridantrieb nach Anspruch 6, **dadurch gekennzeichnet, dass** die Getriebestufe (KE) als ein einfaches Planetengetriebe mit einem Hohlrad (16), einem Planetenträger (17) mit mehreren mit dem Hohlrad (16) in Verzahnungseingriff stehenden Planetenrädern (18), und einem mit den Planetenrädern (18) in Verzahnungseingriff stehenden Sonnenrad (19) ausgebildet ist, wobei das Hohlrad (16) drehfest mit dem Rotor (14) der Elektromaschine (EM) verbunden ist, der Planetenträger (17) drehfest auf der zweiten Eingangswelle (GE2) befestigt ist, und das Sonnenrad (19) gehäusefest arretiert ist.

8. Hybridantrieb nach einem der Ansprüche 1 bis 5, **dadurch gekennzeichnet, dass** die Elektromaschine (EM) achsparallel zu der zweiten Eingangswelle (GE2) angeordnet ist, und dass der Rotor (14) der Elektromaschine (EM) über eine Getriebestufe (KE) mit der zweiten Eingangswelle (GE2) in Triebverbindung steht.

9. Hybridantrieb nach Anspruch 8, **dadurch gekennzeichnet, dass** die Getriebestufe (KE) als ein Stirnradgetriebe mit einem drehfest mit dem Rotor (14) der Elektromaschine (EM) verbundenen ersten Zahnrad und einem drehfest mit der zweiten Eingangswelle (GE2) verbundenen sowie mit dem ersten Zahnrad in Verzahnungseingriff stehenden zweiten Zahnrad ausgebildet ist.

10. Hybridantrieb nach Anspruch 8, **dadurch gekennzeichnet, dass** die Getriebestufe (KE) als ein Kettengetriebe mit einem drehfest mit dem Rotor (14) der Elektromaschine (EM) verbundenen ersten Kettenrad und einem drehfest auf der zweiten Eingangswelle (GE2) angeordneten sowie über eine geschlossene Gliederkette formschlüssig mit dem ersten Kettenrad in Triebverbindung stehenden zweiten Kettenrad ausgebildet ist.

11. Hybridantrieb nach Anspruch 8, **dadurch gekennzeichnet, dass** die Getriebestufe (KE) als ein Riemengetriebe mit einer drehfest mit dem Rotor (14) der Elektromaschine (EM) verbundenen ersten Riemenscheibe und einer drehfest auf der zweiten Eingangswelle (GE2) angeordneten sowie über einen geschlossenen Treibriemen kraftschlüssig mit der ersten Riemenscheibe in Triebverbindung stehenden zweiten Riemenscheibe ausgebildet ist.

12. Hybridantrieb nach einem der Ansprüche 6 bis 11, **dadurch gekennzeichnet, dass** die Getriebestufe (KE) eine Übersetzung im Bereich zwischen i_{KE} = 1,25 und i_{KE} = 1,67 aufweist.

13. Verfahren zur Steuerung eines Hybridantriebs gemäß wenigstens einem der Vorrichtungsansprüche 1 und 3 bis 12, soweit abhängig von Anspruch 1, **dadurch gekennzeichnet, dass** zum Impulsstart des Verbrennungsmotors (VM) bei geöffneter Trennkupplung (K1) und ausgelegten Gängen (G1 - G7, R) zunächst die Schaltkupplung (SE1, SE1') eingerückt und dann die zweite Eingangswelle (GE2) durch die Elektromaschine (EM) bis auf eine vorgegebene, oberhalb der Startdrehzahl des Verbrennungsmotors (VM) liegende Impulsstartdrehzahl beschleunigt wird, und dass der Verbrennungsmotor (VM) dann durch ein schnelles Schließen der Trennkupplung (K1) mittels des Drehimpulses der Elektromaschine (EM) gestartet wird.

14. Verfahren zur Steuerung eines Hybridantriebs gemäß wenigstens einem der Vorrichtungsansprüche 1 bis 12, **dadurch gekennzeichnet, dass** zum Elektrostart des Verbrennungsmotors (VM) bei geöffneter Trennkupplung (K1) und ausgelegten Gängen (G1 - G7, R) die Schaltkupplung (SE1, SE1'; SE2, SE2') eingerückt und bedarfsweise die Trennkupplung (K1) geschlossen wird, und dass der Verbrennungsmotor (VM) dann mittels des Antriebsmomentes der Elektromaschine (EM) gestartet wird.

15. Verfahren nach einem der Ansprüche 14 bis 15, **dadurch gekennzeichnet, dass** zum Boostbetrieb bedarfsweise zunächst ein der zweiten Eingangswelle (GE2) zugeordneter Vorwärtsgang (G2, G4, G6) eingelegt oder die Schaltkupplung (SE1, SE1', SE2, SE2') eingerückt wird, und dass die Elektromaschine (EM) dann als Motor betrieben wird.

16. Verfahren nach einem der Ansprüche 13 bis 15, **dadurch gekennzeichnet, dass** zum Rekuperationsbetrieb bedarfsweise zunächst ein der zweiten Eingangswelle (GE2) zugeordneter Vorwärtsgang (G2, G4, G6) eingelegt oder die Schaltkupplung (SE1, SE1', SE2, SE2') eingerückt wird, und dass die Elektromaschine (EM) dann als Generator betrieben wird.

17. Verfahren nach einem der Ansprüche 13 bis 16, **dadurch gekennzeichnet, dass** zum Elektrofahrbetrieb bei geöffneter Trennkupplung (K1), ausgerückter Schaltkupplung (SE1, SE1', SE2, SE2') und ausgelegten Gängen (G1 - G7, R) zunächst ein der zweiten Eingangswelle (GE2) zugeordneter Gang (G2, G4, G6, R) eingelegt wird, und dass die Elektromaschine (EM) dann als Motor betrieben wird.

18. Verfahren nach einem der Ansprüche 13 bis 17, **dadurch gekennzeichnet, dass** während eines Verbrennungsfahrbetriebs bei einer Schaltung von einem Lastgang (z.B. G3) in einen Zielgang (z.B. G5), die beide der ersten Eingangswelle (GE1) zugeordnet sind, zunächst ein der zweiten Eingangswelle (GE2) zugeordneter Zwischengang (z.B. G4) synchronisiert und eingelegt wird, dann zeitlich überschnitten ein Motormoment der Elektromaschine (EM) aufgebaut, das Motormoment des Verbrennungsmotors (VM) abgebaut sowie die Trennkupplung (K1) geöffnet wird, dass daraufhin der Lastgang (G3) ausgelegt und der Zielgang (G5) synchronisiert sowie eingelegt wird, bevor zeitlich überschnitten das Motormoment der Elektromaschine (EM) wieder abgebaut, das Motormoment des Verbrennungsmotors (VM) wieder aufgebaut sowie die Trennkupplung (K1) geschlossen wird, und abschließend der Zwischengang (G4) wieder ausgelegt wird.

19. Verfahren nach einem der Ansprüche 13 bis 18, **dadurch gekennzeichnet, dass** während eines Verbrennungsfahrbetriebs bei einer Schaltung von einem der ersten Eingangswelle (GE1) zugeordneten Lastgang (z.B. G3) in einen der zweiten Eingangswelle (GE2) zugeordneten Zielgang (z.B. G4) zunächst der Zielgang (G4) synchronisiert und eingelegt wird, dann zeitlich überschnitten ein Motormoment der Elektromaschine (EM) aufgebaut, das Motormoment des Verbrennungsmotors (VM) abgebaut sowie die Trennkupplung (K1) geöffnet wird, dass daraufhin der Lastgang (G3) ausgelegt und die Schaltkupplung (SE1, SE1', SE2, SE2') synchronisiert und eingerückt wird, bevor zeitlich überschnitten das Motormoment der Elektromaschine (EM) wieder abgebaut, das Motormoment des Verbrennungsmotors (VM) wieder aufgebaut sowie bedarfsweise die Trennkupplung (K1) geschlossen wird.

20. Verfahren nach einem der Ansprüche 13 bis 19, **dadurch gekennzeichnet, dass** während eines Verbrennungsfahrbetriebs bei einer Schaltung von einem der zweiten Eingangswelle (GE2) zugeordneten Lastgang (z.B. G4) in einen der ersten Eingangswelle (GE1) zugeordneten Zielgang (z.B. G5) zunächst zeitlich überschnitten ein Motormoment der Elektromaschine (EM) aufgebaut, das Motormoment des Verbrennungsmotors (VM) abgebaut sowie die Schaltkupplung (SE1, SE1'; SE2, SE2') ausgerückt und bedarfsweise die Trennkupplung (K1) geöffnet wird, dass daraufhin der Zielgang (G5) synchronisiert und eingelegt wird, bevor zeitlich überschnitten das Motormoment der Elektromaschine (EM) wieder abgebaut, das Motormoment des Verbrennungsmotors (VM) wieder aufgebaut sowie die Trennkupplung (K1) geschlossen wird, und abschließend der Lastgang (G4) ausgelegt wird.

21. Verfahren nach einem der Ansprüche 13 bis 20, **dadurch gekennzeichnet, dass** während eines Verbrennungsfahrbetriebs bei einer Schaltung von einem Lastgang (z.B. G4) in einen Zielgang (z.B. G6), die beide der zweiten Eingangswelle (GE2) zugeordnet sind, zunächst zeitlich überschnitten ein Motormoment der Elektromaschine (EM) aufgebaut, das Motormoment des Verbrennungsmotors (VM) abgebaut sowie die Schaltkupplung (SE1, SE1'; SE2, SE2') ausgerückt und bedarfsweise die Trennkupplung (K1) geöffnet wird, dass daraufhin ein der ersten Eingangswelle (GE1) zugeordneter Zwischengang (z.B. G5) synchronisiert und eingelegt wird, bevor zeitlich überschnitten das Motormoment der Elektromaschine (EM) wieder abgebaut, das Motormoment des Verbrennungsmotors (VM) wieder aufgebaut sowie die Trennkupplung (K1) geschlossen wird, und dass dann der Lastgang (G4) ausgelegt und der Zielgang (G6) synchronisiert sowie eingelegt wird, anschließend zeitlich überschnitten ein Motormoment der Elektromaschine (EM) aufgebaut, das Motormoment des Verbrennungsmotors (VM) abgebaut sowie die Trennkupplung (K1) geöffnet wird, dass daraufhin der Zwischengang (G5) wieder ausgelegt und die Schaltkupplung (SE1, SE1'; SE2, SE2') synchronisiert und eingerückt wird, bevor zeitlich überschnitten das Motormoment der Elektromaschine (EM) wieder abgebaut, das Motormoment des Verbrennungsmotors (VM) wieder aufgebaut sowie bedarfsweise die Trennkupplung (K1) geschlossen wird.

## Claims

1. Hybrid drive of a motor vehicle, which comprises an internal combustion engine (VM) with a driveshaft (2), an electric machine (EM) which is operable as a motor and as a generator and which has a rotor (14), and a multi-stage manual gearbox (15) with two coaxially arranged input shafts (GE1, GE2) and one common output shaft (GA), wherein the first input shaft (GE1) is arranged centrally within the second input shaft (GE2) which is formed as a hollow shaft, at least the first input shaft (GE1) is connectable by means of an associated separating clutch (K1) to the drive shaft (2) of the internal combustion engine (VM), the second input shaft (GE2) is connected in terms of drive to the rotor (14) of the electric machine (EM), and the two input shafts (GE1, GE2) are in each case selectively connectable in terms of drive to the output shaft (GA) by means of multiple gear-ratio gear sets (3, 5, 7, 9; 4, 6, 8, 10) with different transmission ratio and with in each case one shiftable gear-ratio clutch (S1, S3; S2, S4), wherein only the first input shaft (GE1) is connectable by means of the associated separating clutch (K1) to the driveshaft (2) of the internal combustion engine (VM), and wherein the first input shaft (GE1) and the second input shaft (GE2) are couplable to one another by means of an engageable and disengageable positively locking shift clutch (SE1, SE1'), **characterized in that** the electric machine (EM) and the shift clutch (SE1, SE1'; SE2, SE2') are arranged outside a gearbox housing (12) of the manual gearbox (15), between the separating clutch (K1) and an engine-side end wall (12a) of the gearbox housing (12).

2. Hybrid drive of a motor vehicle, which comprises an internal combustion engine (VM) with a driveshaft (2), an electric machine (EM) which is operable as a motor and as a generator and which has a rotor (14), and a multi-stage manual gearbox (15) with two coaxially arranged input shafts (GE1, GE2) and one common output shaft (GA), wherein the first input shaft (GE1) is arranged centrally within the second input shaft (GE2) which is formed as a hollow shaft, at least the first input shaft (GE1) is connectable by means of an associated separating clutch (K1) to the drive shaft (2) of the internal combustion engine (VM), the second input shaft (GE2) is connected in terms of drive to the rotor (14) of the electric machine (EM), and the two input shafts (GE1, GE2) are in each case selectively connectable in terms of drive to the output shaft (GA) by means of multiple gear-ratio gear sets (3, 5, 7, 9; 4, 6, 8, 10) with different transmission ratio and with in each case one shiftable gear-ratio clutch (S1, S3; S2, S4), wherein only the first input shaft (GE1) is connectable by means of the associated separating clutch (K1) to the driveshaft (2) of the internal combustion engine (VM), and wherein an engine-side part (21) of the separating clutch (K1) and the second input shaft (GE2) are couplable to one another by means of an engageable and disengageable positively locking shift clutch (SE2, SE2'), **characterized in that** the electric machine (EM) and the shift clutch (SE1, SE1'; SE2, SE2') are arranged outside a gearbox housing (12) of the manual gearbox (15), between the separating clutch (K1) and an engine-side end wall (12a) of the gearbox housing (12).

3. Hybrid drive according to Claim 1 or 2, **characterized in that** the shift clutch (SE1, SE2) is formed as a friction-synchronized synchronizing clutch.

4. Hybrid drive according to Claim 1 or 2, **characterized in that** the shift clutch (SE1', SE2') is formed as a non-synchronized dog clutch.

5. Hybrid drive according to one of Claims 1 to 4, **characterized in that** at least the gear-ratio clutches (S2', S4') of the gear-ratio gear sets (4, 6, 8, 10) assigned to the second input shaft (GE2) are formed as non-synchronized dog clutches.

6. Hybrid drive according to one of Claims 1 to 5, **characterized in that** the electric machine (EM) is arranged coaxially over the second input shaft (GE2), and **in that** the rotor (14) of the electric machine (EM) is directly connected rotationally conjointly to the second input shaft (GE2), or is connected in terms of drive to the second input shaft (GE2) via a mechanism stage (KE).

7. Hybrid drive according to Claim 6, **characterized in that** the mechanism stage (KE) is formed as a single planetary gear set with a ring gear (16), a planet carrier (17) with multiple planet gears (18) which are in meshing engagement with the ring gear (16), and a sun gear (19) which is in meshing engagement with the planet gears (18), wherein the ring gear (16) is connected rotationally conjointly to the rotor (14) of the electric machine (EM), the planet carrier (17) is fastened rotationally conjointly to the second input shaft (GE2), and the sun gear (19) is arrested so as to be fixed with respect to a housing.

8. Hybrid drive according to one of Claims 1 to 5, **characterized in that** the electric machine (EM) is arranged axially parallel with respect to the second input shaft (GE2), and **in that** the rotor (14) of the electric machine (EM) is connected in terms of drive to the second input shaft (GE2) via a mechanism stage (KE).

9. Hybrid drive according to Claim 8, **characterized in that** the mechanism stage (KE) is formed as a spur-gear mechanism with a first toothed gear connected rotationally conjointly to the rotor (14) of the electric machine (EM) and with a second toothed gear which is connected rotationally conjointly to the second input shaft (GE2) and which is in meshing engagement with the first toothed gear.

10. Hybrid drive according to Claim 8, **characterized in that** the mechanism stage (KE) is formed as a chain-type mechanism with a first sprocket connected rotationally conjointly to the rotor (14) of the electric machine (EM) and with a second sprocket which is arranged rotationally conjointly on the second input shaft (GE2) and which is connected in terms of drive to the first sprocket in positively locking fashion by means of a closed link chain.

11. Hybrid drive according to Claim 8, **characterized in that** the mechanism stage (KE) is formed as a belt-type mechanism with a first belt pulley, which is connected rotationally conjointly to the rotor (14) of the electric machine (EM), and with a second belt pulley, which is arranged rotationally conjointly on the second input shaft (GE2) and which is connected in terms of drive to the first belt pulley in non-positively locking fashion by means of a closed drive belt.

12. Hybrid drive according to one of Claims 6 to 11, **characterized in that** the mechanism stage (KE) has a transmission ratio in the range between i_{KE} = 1.25 and i_{KE} = 1.67.

13. Method for controlling a hybrid drive according to at least one of the device Claims 1 and 3 to 12, where dependent on Claim 1, **characterized in that**, for the momentum-based start of the internal combustion engine (VM), with the separating clutch (K1) open and gear ratios (G1 - G7, R) disengaged, firstly the shift clutch (SE1, SE1') is engaged, and then the second input shaft (GE2) is accelerated by the electric machine (EM) to a predefined momentum-based start rotational speed which is higher than the starting rotation speed of the internal combustion engine (VM), and **in that** the internal combustion engine (VM) is then started, by means of a rapid closure of the separating clutch (K1), using the angular momentum of the electric machine (EM).

14. Method for controlling a hybrid drive according to at least one of the device Claims 1 to 12, **characterized in that**, for the electric starting of the internal combustion engine (VM), with the separating clutch (K1) open and gear ratios (G1 - G7, R) disengaged, the shift clutch (SE1, SE1'; SE2, SE2') is engaged and, if required, the separating clutch (K1) is closed, and **in that** the internal combustion engine (VM) is then started by means of the drive torque of the electric machine (EM).

15. Method according to either of Claims 14 and 15, **characterized in that**, for boost operation, if required, firstly a forward gear ratio (G2, G4, G6) assigned to the second input shaft (GE2) is engaged, or the shift clutch (SE1, SE1', SE2, SE2') is engaged, and **in that** the electric machine (EM) is then operated as a motor.

16. Method according to one of Claims 13 to 15, **characterized in that**, for recuperation operation, if required, firstly a forward gear ratio (G2, G4, G6) assigned to the second input shaft (GE2) is engaged, or the shift clutch (SE1, SE1', SE2, SE2') is engaged, and **in that** the electric machine (EM) is then operated as a generator.

17. Method according to one of Claims 13 to 16, **characterized in that**, for electric driving operation, with the separating clutch (K1) open, the shift clutch (SE1, SE1', SE2, SE2') disengaged and gear ratios (G1 - G7, R) disengaged, firstly a gear ratio (G2, G4, G6, R) assigned to the second input shaft (GE2) is engaged, and **in that** the electric machine (EM) is then operated as a motor.

18. Method according to one of Claims 13 to 17, **characterized in that**, during internal-combustion-engine-powered traction operation, during a shift from a load gear ratio (e.g. G3) to a target gear ratio (e.g. G5) which are both assigned to the first input shaft (GE1), firstly an intermediate gear ratio (e.g. G4) assigned to the second input shaft (GE2) is synchronized and engaged, and then, in an overlapping manner in terms of time, a motor torque of the electric machine (EM) is built up, the engine torque of the internal combustion engine (VM) is reduced, and the separating clutch (K1) is opened, **in that** the load gear ratio (G3) is thereupon disengaged and the target gear ratio (G5) is synchronized and engaged before, in an overlapping manner in terms of time, the motor torque of the electric machine (EM) is reduced again, the engine torque of the internal combustion engine (VM) is built up again, and the separating clutch (K1) is closed, and finally the intermediate gear ratio (G4) is disengaged again.

19. Method according to one of Claims 13 to 18, **characterized in that**, during internal-combustion-engine-powered traction operation, during a shift from a load gear ratio (e.g. G3) assigned to the first input shaft (GE1) to a target gear ratio (e.g. G4) assigned to the second input shaft (GE2), firstly the target gear ratio (G4) is synchronized and engaged, and then, in an overlapping manner in terms of time, a motor torque of the electric machine (EM) is built up, the engine torque of the internal combustion engine (VM) is reduced, and the separating clutch (K1) is opened, **in that** the load gear ratio (G3) is thereupon disengaged and the shift clutch (SE1, SE1', SE2, SE2') is synchronized and engaged before, in an overlapping manner in terms of time, the motor torque of the electric machine (EM) is reduced again, the engine torque of the internal combustion engine (VM) is built up again, and, if required, the separating clutch (K1) is closed.

20. Method according to one of Claims 13 to 19, **characterized in that**, during internal-combustion-engine-powered traction operation, during a shift from a load gear ratio (e.g. G4) assigned to the second input shaft (GE2) to a target gear ratio (e.g. G5) assigned to the first input shaft (GE1), firstly, in an overlapping manner in terms of time, a motor torque of the electric machine (EM) is built up, the engine torque of the internal combustion engine (VM) is reduced and the shift clutch (SE1, SE1', SE2, SE2') is disengaged and, if required, the separating clutch (K1) is opened, **in that** the target gear ratio (G5) is thereupon synchronized and engaged before, in an overlapping manner in terms of time, the motor torque of the electric machine (EM) is reduced again, the engine torque of the internal combustion engine (VM) is built up again, and the separating clutch (K1) is closed, and finally the load gear ratio (G4) is disengaged.

21. Method according to one of Claims 13 to 20, **characterized in that**, during internal-combustion-engine-powered traction operation, during a shift from a load gear ratio (e.g. G4) to a target gear ratio (e.g. G6) which are both assigned to the second input shaft (GE2), firstly, in an overlapping manner in terms of time, a motor torque of the electric machine (EM) is built up, the engine torque of the internal combustion engine (VM) is reduced, and the shift clutch (SE1, SE1', SE2, SE2') is disengaged and, if required, the separating clutch (K1) is opened, **in that** an intermediate gear ratio (e.g. G5) assigned to the first input shaft (GE1) is thereupon synchronized and engaged before, in an overlapping manner in terms of time, the motor torque of the electric machine (EM) is reduced again, the engine torque of the internal combustion engine (VM) is built up again, and the separating clutch (K1) is closed, and **in that**, then, the load gear ratio (G4) is disengaged and the target gear ratio (G6) is synchronized and engaged, and subsequently, in an overlapping manner in terms of time, a motor torque of the electric machine (EM) is built up, the engine torque of the internal combustion engine (VM) is reduced and the separating clutch (K1) is opened, **in that** the intermediate gear ratio (G5) is thereupon disengaged again and the shift clutch (SE1, SE1', SE2, SE2') is synchronized and engaged before, in an overlapping manner in terms of time, the motor torque of the electric machine (EM) is reduced again, the engine torque of the internal combustion engine (VM) is built up again, and, if required, the separating clutch (K1) is closed.

## Revendications

1. Entraînement hybride d'un véhicule à moteur comprenant un moteur à combustion interne (VM) avec un arbre d'impulsion (2), une machine électrique (EM) avec un rotor (14) pouvant être entraînée en mode moteur et générateur et une boîte de vitesses (15) à plusieurs étages avec deux arbres d'entrée (GE1, GE2) disposés dans le plan coaxial et un arbre de sortie (GA) commun, le premier arbre d'entrée (GE1) étant disposé centralement à l'intérieur du deuxième arbre d'entrée (GE2) réalisé sous la forme d'un arbre creux, au moins le premier arbre d'entrée (GE1) pouvant être relié à l'arbre d'impulsion (2) du moteur à combustion interne (VM) via un embrayage de coupure (K1) associé, le deuxième arbre d'entrée (GE2) étant en liaison d'impulsion avec le rotor (14) de la machine électrique (EM) et les deux arbres d'entrée (GE1, GE2) pouvant respectivement être amenés en liaison d'impulsion via plusieurs jeux de rapport de roue (3, 5, 7, 9 ; 4, 6, 8, 10) avec une démultiplication différente et respectivement un embrayage de rapport (S1, S3 ; S2, S4) embrayable de façon sélective avec l'arbre de sortie (GA), seul le premier arbre d'entrée (GE1) pouvant être relié à l'arbre d'impulsion (2) du moteur à combustion interne (VM) via l'embrayage de coupure (K1) associé et le premier arbre d'entrée (GE1) et le deuxième arbre d'entrée (GE2) pouvant être couplés entre eux via un embrayage de changement de vitesse (SE1, SE1') par complémentarité de formes pouvant être engagé et désengagé, **caractérisé en ce que** la machine électrique (EM) et l'embrayage de changement de vitesse (SE1, SE1' ; SE2, SE2') sont disposés à l'extérieur d'un carter de boîte de vitesses (12) de la boîte de vitesses (15) entre l'embrayage de coupure (K1) et une paroi avant (12a), côté moteur, du carter de boîte de vitesses (12).

2. 1. Entraînement hybride d'un véhicule à moteur comprenant un moteur à combustion interne (VM) avec un arbre d'impulsion (2), une machine électrique (EM) avec un rotor (14) pouvant être entraînée en mode moteur et générateur et une boîte de vitesses (15) à plusieurs étages avec deux arbres d'entrée (GE1, GE2) disposés dans le plan coaxial et un arbre de sortie (GA) commun, le premier arbre d'entrée (GE1) étant disposé centralement à l'intérieur du deuxième arbre d'entrée (GE2) réalisé sous la forme d'un arbre creux, au moins le premier arbre d'entrée (GE1) pouvant être relié à l'arbre d'impulsion (2) du moteur à combustion interne (VM) via un embrayage de coupure (K1) associé, le deuxième arbre d'entrée (GE2) étant en liaison d'impulsion avec le rotor (14) de la machine électrique (EM) et les deux arbres d'entrée (GE1, GE2) pouvant respectivement être amenés en liaison d'impulsion via plusieurs jeux de rapport de roue (3, 5, 7, 9 ; 4, 6, 8, 10) avec une démultiplication différente et respectivement un embrayage de rapport (S1, S3 ; S2, S4) embrayable de façon sélective avec l'arbre de sortie (GA), seul le premier arbre d'entrée (GE1) pouvant être relié à l'arbre d'impulsion (2) du moteur à combustion interne (VM) via l'embrayage de coupure (K1) associé et une partie (21) côté moteur de l'embrayage de coupure (K1) et le deuxième arbre d'entrée (GE2) pouvant être couplés entre eux via un embrayage de changement de vitesse (SE2, SE2') réalisé par complémentarité de formes pouvant être engagé et désengagé, **caractérisé en ce que** la machine électrique (EM) et l'embrayage de changement de vitesse (SE1, SE1' ; SE2, SE2') sont disposés à l'extérieur d'un carter de boîte de vitesses (12) de la boîte de vitesses (15) entre l'embrayage de coupure (K1) et une paroi avant (12a) côté moteur du carter de boîte de vitesses (12).

3. Entraînement hybride selon la revendication 1 ou 2, **caractérisé en ce que** l'embrayage de changement de vitesse (SE1, SE2) est réalisé sous la forme d'un embrayage synchrone à synchronisation de frottements.

4. Entraînement hybride selon la revendication 1 ou 2, **caractérisé en ce que** l'embrayage de changement de vitesse (SE1', SE2') est réalisé sous la forme d'un embrayage à griffes non synchronisé.

5. Entraînement hybride selon l'une quelconque des revendications 1 à 4, **caractérisé en ce qu'**au moins les embrayages de rapport (S2', S4') des jeux de rapport de roue (4, 6, 8, 10) associés au deuxième arbre d'entrée (GE2) sont réalisés sous la forme d'embrayages à griffes non synchronisés.

6. Entraînement hybride selon l'une quelconque des revendications 1 à 5, **caractérisé en ce que** la machine électrique (EM) est disposée dans le plan coaxial au-dessus du deuxième arbre d'entrée (GE2) et que le rotor (14) de la machine électrique (EM) est relié directement solidairement en rotation au deuxième arbre d'entrée (GE2) ou est en liaison d'impulsion avec le deuxième arbre d'entrée (GE2) via un étage de boîte de vitesses (KE).

7. Entraînement hybride selon la revendication 6, **caractérisé en ce que** l'étage de boîte de vitesses (KE) est réalisé sous la forme d'un engrenage planétaire simple avec une roue creuse (16), avec un support planétaire (17) comportant plusieurs roues planétaires (18) en prise d'endentement avec la roue creuse (16) et avec une roue solaire (19) en prise d'endentement avec les roues planétaires (18), la roue creuse (16) étant reliée solidairement en rotation au rotor (14) de la machine électrique (EM), le support planétaire (17) étant fixé solidairement en rotation sur le deuxième arbre d'entrée (GE2) et la roue solaire (19) étant bloquée par fixation permanente au carter.

8. Entraînement hybride selon l'une quelconque des revendications 1 à 5, **caractérisé en ce que** la machine électrique (EM) est disposée parallèlement à l'axe par rapport au deuxième arbre d'entrée (GE2) et que le rotor (14) de la machine électrique (EM) est en liaison d'impulsion avec le deuxième arbre d'entrée (GE2) via un étage de boîte de vitesses (KE).

9. Entraînement hybride selon la revendication 8, **caractérisé en ce que** l'étage de boîte de vitesses (KE) est réalisé sous la forme d'un engrenage de roue avant avec une première roue dentée reliée solidairement en rotation au rotor (14) de la machine électrique (EM) et avec une deuxième roue dentée reliée solidairement en rotation au deuxième arbre d'entrée (GE2) et en prise d'endentement avec la première roue dentée.

10. Entraînement hybride selon la revendication 8, **caractérisé en ce que** l'étage de boîte de vitesses (KE) est réalisé sous la forme d'une transmission par chaîne avec une première roue de chaîne reliée solidairement en rotation au rotor (14) de la machine électrique (EM) et avec une deuxième roue de chaîne disposée solidairement en rotation sur le deuxième arbre d'entrée (GE2) ainsi qu'en liaison d'impulsion, par complémentarité de formes, avec la première roue de chaîne via une chaîne à maillons fermée.

11. Entraînement hybride selon la revendication 8, **caractérisé en ce que** l'étage de boîte de vitesses (KE) est réalisé sous la forme d'une transmission à courroie avec un premier disque de courroie relié solidairement en rotation au rotor (14) de la machine électrique (EM) et avec un deuxième disque de courroie disposé solidairement en rotation sur le deuxième arbre d'entrée (GE2) ainsi qu'en liaison d'impulsion, par complémentarité de forces, avec le premier disque de courroie via une courroie d'entraînement fermée.

12. Entraînement hybride selon l'une quelconque des revendications 6 à 11, **caractérisé en ce que** l'étage de boîte de vitesses (KE) comporte une démultiplication dans la plage comprise entre i_{KE} = 1,25 et i_{KE} = 1,67.

13. Procédé de commande d'un entraînement hybride selon au moins l'une quelconque des revendications de dispositif 1 et 3 à 12 associées à la revendication 1, **caractérisé en ce que** pour démarrer l'impulsion du moteur à combustion interne (VM) avec l'embrayage de coupure (K1) ouvert et le rapport (G1 - G7, R) désengagé, l'embrayage de changement de vitesse (SE1, SE1') est d'abord enclenché et le deuxième arbre d'entrée (GE2) ensuite accéléré par la machine électrique (EM) jusqu'à atteindre une vitesse de rotation de démarrage d'impulsion prédéfinie située au-dessus de la vitesse de rotation de démarrage du moteur à combustion interne (VM) et que le moteur à combustion interne (VM) est ensuite démarré par une fermeture rapide de l'embrayage de coupure (K1) à l'aide de l'impulsion de rotation de la machine électrique (EM).

14. Procédé de commande d'un entraînement hybride selon au moins l'une quelconque des revendications de dispositif 1 à 12, **caractérisé en ce que** pour le démarrage électrique du moteur à combustion interne (VM) en situation d'embrayage de coupure ouvert (K1) et de rapport (G1 - G7, R) désengagé, l'embrayage de changement de vitesse (SE1, SE1' ; SE2, SE2') est enclenché et si besoin l'embrayage de coupure (K1) fermé et que le moteur à combustion interne (VM) est ensuite démarré à l'aide du couple d'entraînement de la machine électrique (EM).

15. Procédé selon l'une quelconque des revendications 14 à 15, **caractérisé en ce que** pour le fonctionnement en mode Boost, si besoin d'abord un rapport de marche avant (G2, G4, G6) associé au deuxième arbre d'entrée (GE2) est engagé ou l'embrayage de changement de vitesse (SE1, SE1', SE2, SE2') est enclenché et que la machine électrique (EM) est alors entraînée en mode moteur est entraîné.

16. Procédé selon l'une quelconque des revendications 13 à 15, **caractérisé en ce que** pour le fonctionnement en mode récupération si besoin d'abord un rapport de marche avant (G2, G4, G6) associé au deuxième arbre d'entrée (GE2) est engagé ou que l'embrayage de changement de vitesse (SE1, SE1', SE2, SE2') est enclenché et que la machine électrique (EM) est alors entraînée en mode générateur.

17. Procédé selon l'une quelconque des revendications 13 à 16, **caractérisé en ce que** pour le fonctionnement en mode électrique avec l'embrayage de coupure ouvert (K1), l'embrayage de changement de vitesse (SE1, SE1', SE2, SE2') désenclenché et le rapport (G1 - G7, R) désengagé, un rapport (G2, G4, G6, R) associé au deuxième arbre d'entrée (GE2) est d'abord enclenché et que la machine électrique (EM) est alors entraînée en mode moteur.

18. Procédé selon l'une quelconque des revendications 13 à 17, **caractérisé en ce que** pendant un fonctionnement en mode de conduite avec combustion en situation de passage d'un rapport de charge (par exemple G3) dans un rapport cible (par exemple G5) tous deux associés au premier arbre d'entrée (GE1), un rapport intermédiaire (par exemple G4) associé au deuxième arbre d'entrée (GE2) est d'abord synchronisé et engagé puis, avec chevauchement, un couple du moteur de la machine électrique (EM) est mis en place, le couple du moteur du moteur à combustion interne (VM) est arrêté et l'embrayage de coupure (K1) est ouvert, que sur ce le rapport de charge (G3) est désengagé et que le rapport cible (G5) est synchronisé et engagé, avant qu'avec chevauchement, le couple du moteur de la machine électrique (EM) soit de nouveau arrêté, le couple du moteur du moteur à combustion interne (VM) de nouveau établi et l'embrayage de coupure (K1) fermé, puis le rapport intermédiaire (G4) de nouveau désengagé.

19. Procédé selon l'une quelconque des revendications 13 à 18, **caractérisé en ce que** pendant un fonctionnement en mode de conduite avec combustion en situation de passage d'un rapport de charge (par exemple G3) associé au premier arbre d'entrée (GE1) dans un rapport cible (par exemple G4) associé au deuxième arbre d'entrée (GE2), le rapport cible (G4) est d'abord synchronisé et engagé, puis, avec chevauchement, un couple du moteur de la machine électrique (EM) est mis en place, le couple moteur du moteur à combustion interne (VM) est arrêté et l'embrayage de coupure (K1) est ouvert, que sur ce le rapport de charge (G3) est désengagé et l'embrayage de changement de vitesse (SE1, SE1', SE2, SE2') synchronisé et enclenché, avant qu'avec chevauchement, le couple du moteur de la machine électrique (EM) soit de nouveau arrêté, le couple du moteur du moteur à combustion interne (VM) de nouveau mis en place et si besoin l'embrayage de coupure (K1) fermé.

20. Procédé selon l'une quelconque des revendications 13 à 19, **caractérisé en ce que** pendant un fonctionnement en mode de conduite avec combustion en situation de passage d'un rapport de charge (par exemple G4) associé au deuxième arbre d'entrée (GE2) dans un rapport cible (par exemple G5) associé au premier arbre d'entrée (GE1), d'abord, avec chevauchement, un couple du moteur de la machine électrique (EM) est mis en place, le couple du moteur du moteur à combustion interne (VM) arrêté et l'embrayage de changement de vitesse (SE1, SE1' ; SE2, SE2') désengagé et si besoin l'embrayage de coupure (K1) ouvert, que sur ce le rapport cible (G5) est synchronisé et engagé, avant qu'avec chevauchement le couple du moteur de la machine électrique (EM) soit de nouveau arrêté, le couple du moteur du moteur à combustion interne (VM) de nouveau mis en place et l'embrayage de coupure (K1) fermé, puis que le rapport de charge (G4) soit désengagé.

21. Procédé selon l'une quelconque des revendications 13 à 20, **caractérisé en ce que** pendant un fonctionnement en mode de conduite avec combustion, en situation de passage d'un rapport de charge (par exemple G4) dans un rapport cible (par exemple G6), tous deux sont associés au deuxième arbre d'entrée (GE2), d'abord, avec chevauchement, un couple du moteur de la machine électrique (EM) est mis en place, le couple du moteur du moteur à combustion interne (VM) est arrêté et l'embrayage de changement de vitesse (SE1, SE1' ; SE2, SE2') est désenclenché et si besoin l'embrayage de coupure (K1) est ouvert, que sur ce un rapport intermédiaire (par exemple G5) associé au premier arbre d'entrée (GE1) est synchronisé et engagé, avant qu'avec chevauchement, le couple du moteur de la machine électrique (EM) soit de nouveau arrêté, le couple du moteur du moteur à combustion interne (VM) de nouveau mis en place et l'embrayage de coupure (K1) fermé, et qu'ensuite le rapport de charge (G4) soit désengagé et le rapport cible (G6) synchronisé et engagé, puis qu'avec chevauchement, un couple du moteur de la machine électrique (EM) soit mis en place, le couple du moteur du moteur à combustion interne (VM) arrêté et l'embrayage de coupure (K1) ouvert, que sur ce le rapport intermédiaire (G5) soit de nouveau désengagé, et l'embrayage de changement de vitesse (SE1, SE1', SE2, SE2') synchronisé et enclenché, avant, avec chevauchement, que le couple du moteur de la machine électrique (EM) soit de nouveau arrêté, le couple du moteur du moteur à combustion interne (VM) de nouveau mis en place et si besoin l'embrayage de coupure (K1) fermé.
